(19) Europäisches Patentamt
European Patent Office
Office européen des brevets

(11) EP 4 144 217 A1

(12) EUROPEAN PATENT APPLICATION

(43) Date of publication:
**08.03.2023 Bulletin 2023/10**

(21) Application number: **22190165.5**

(22) Date of filing: **12.08.2022**

(51) International Patent Classification (IPC):
***A01N 33/12** (2006.01)* ***A01N 59/00** (2006.01)*
***A01N 31/16** (2006.01)* ***A01P 1/00** (2006.01)*

(52) Cooperative Patent Classification (CPC):
(C-Sets available)
**A01P 1/00; A01N 33/12** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.09.2021 IT 202100022721**

(71) Applicant: **Viraschutz Europe S.r.l.**
**20121 Milano (IT)**

(72) Inventors:
- **BORDINI, Danilo**
  **20121 Milano (IT)**
- **CENSI, Roberta**
  **20121 Milano (IT)**

(74) Representative: **Currado, Luisa et al**
**Cantaluppi & Partners S.r.l.**
**Via XX Settembre 98/G**
**00187 Roma (IT)**

# (54) ANTIMICROBIAL COMPOSITION FOR HARD SURFACES

(57) An antimicrobial composition and a kit comprising at least one quaternary ammonium silicone compound (Si-QAC) and at least one curing agent and optionally further comprising a wetting agent and/or at least one primer and/or a cross-linker being a polyphenol containing at least two hydroxyl groups their use and a method thereof for cleaning and/or disinfecting surfaces, preferably for the long-term antimicrobial protection of hard surfaces, preferably indoor surfaces are disclosed.

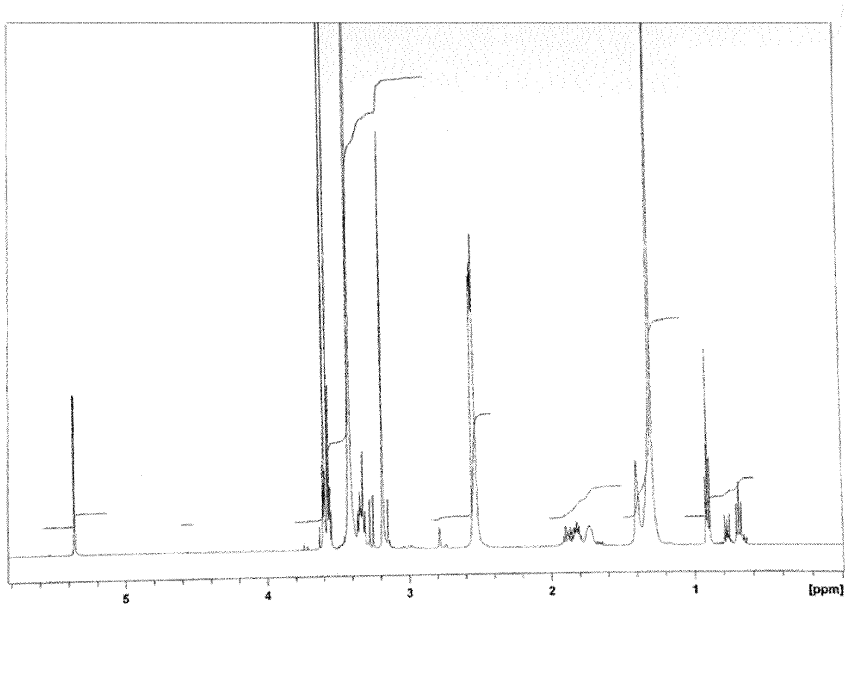


FIG 1

(52) Cooperative Patent Classification (CPC): (Cont.)

C-Sets
**A01N 33/12, A01N 31/16, A01N 59/00;**
**A01N 33/12, A01N 33/12;**
**A01N 33/12, A01N 59/00**

## Description

### Background of the invention

The present invention refers to the field of chemistry and in particular to a composition used to form antimicrobial coatings to be applied to indoor hard surfaces, which are typically found in domestic, industrial and public environments.

### State of the Art

The covalent surface grafting of quaternary ammonium compounds onto the surfaces is a feasible and promising approach for the formation of safe and effective antimicrobial materials with potential application in the fields of industrial, public and household antimicrobial protection, medical devices, food industry, water treatment systems and others.

Quaternary ammonium silicone compounds (Si-QAC) provide surfaces with a long-lasting residual effectiveness against a broad spectrum of microorganisms, including bacteria, viruses, fungi, mold, yeast, spores, and algae. Si-QAC coatings provide extremely unique and efficient methods for controlling surface contamination when being deployed with routine cleaning and disinfection protocols.

Unlike traditional disinfectants that rely on a mechanism of action based on the leaching or diffusion of the active component in a wet or humid environment to be taken up by microorganisms, non-migrating Si-QACs are fixed on a surface, kill bacteria by active contact and cannot be consumed by microorganisms.

Hence, compared to traditional migrating disinfectants, Si-QACs do not have the disadvantages related to the migration, gradual loss of effectiveness of the surfaces and the generation of resistant microorganism strains.

Si-QACs deploy a mechanical kill which punctures a cells membrane then applies a positive charge which neutralizes the cell.

The mode of action and functionality of Si-QACs, when applied to the surface, is based on covalent bonding to the surface since the silane base creates the permanent covalent bond to both other molecules and the surface itself, on attraction of bacteria to the surface, due to the positively charged nitrogen which draws the microorganisms towards the surface by ionic interaction, on the mechanical kill, as the positively charged nitrogen pulls the microorganism down, the long carbon chain pierces the cells wall thereby altering its ability to properly function. If the cell happens to survive this disruption, the nitrogen applies the positive charge which finally neutralizes the microorganism.

The durability of the coating on the surface is key for the long-term protection against pathogenic species. Durability is strictly related to the ability of the silane base to strongly bind the surface.

Alkoxysilanes are known as coupling agents that can form Si-O bonds with hydroxyl groups.

This synthetic approach advances genericity since it is compatible with all OH group containing surfaces and robustness, as it results in the formation of a strong tridentate bond.

However, the differences in the chemical nature of the surfaces and the density of the hydroxyl groups on each specific surface highly determines the concentration of surface-bound Si-QAC and, consequently, its capacity to inhibit bacteria growth.

One of the disadvantages of Si-QACs is their poor antimicrobial efficacy on certain materials where hydroxyl groups are not or poorly available and a high extent of surface-to-surface variability.

The direct linkage of trialkoxysilyl-QACs to surfaces was applied consistently, on many types of surfaces (Isquith, A. J., Abbott, E. A. & Walters, P. A. Surface-bonded antimicrobial activity of an organosilicon quaternary ammonium chloride. Appl. Microbiol. 24, 859-863, 1972).

Andresen, M. et al. Nonleaching Antimicrobial Films Prepared from Surface-Modified Microfibrillated Cellulose. Biomacromolecules 8, 2149-2155 (2007) discloses covalently linked octadecyldimethyl (3-trimethoxysilylpropyl) ammonium chloride on microfibrillated cellulose via a reaction conducted in a methanol/water suspension at room temperature. It is reported that a very low amount of Si-QAC was immobilized to the surface, yet sufficient to kill 99% of S. Aureus, E. Coli and P. Aeruginosa for concentration of Si-QAC of at least 0.14%.

Torkelson, A. A. et al. Investigation of quaternary ammonium silane-coated sand filters for the removal of bacteria and viruses from drinking water. J. Appl. Microbiol. 113, 1196-1207, 2012, discloses attached dimethyloctadecyl [3-(trimethoxysilyl) propyl] ammonium chloride to silica sand by a reaction in ethanol and subsequent thermal curing at 100°C for 24°C. The QAC-modified sand demonstrated a low to moderate efficacy in filtering bacteria and viruses, with a logarithmic reduction of microbial concentration of 1.7 log, 1.8 log 1.9 log and 0.36 log for E. coli, MS2 coliphage, Poliovirus type 3 and Adenovirus type 2, respectively.

Poverenov, E. et al. Durable contact active antimicrobial materials formed by a one-step covalent modification of polyvinyl alcohol, cellulose and glass surfaces. Colloids Surfaces B Biointerfaces 112, 356-361, 2013, reports covalent linkage of QACs onto glass. Glass beads were cleaned with 75% $HNO_3$ at ambient temperature for 12 h, washed with water until the pH of the liquid washings reached 5.0 and then dried at 200°C. Trimethoxysilylpropyl octadecyldimethyl ammonium chloride was reacted with glass in toluene under reflux at 110°C for 8 days.

Meng, J. et al. Antibacterial cellulose membrane via one-step covalent immobilization of ammonium/amine groups. Desalination 359, 156-166, 2015, performed direct covalent linkage of QAC onto regenerated cellulose membrane surfaces in water at pH 4 and room temperature for 4 hours. Then, the wet membranes were dried in a vacuum oven at 110 °C for 2 h. The coated membranes killed 99.5% of Escherichia coli and Staphylococcus aureus bacterial load.

Gottenbos, B., van der Mei, H. C., Klatter, F., Nieuwenhuis, P. & Busscher, H. J. In vitro and in vivo antimicrobial activity of covalently coupled quaternary ammonium silane coatings on silicone rubber. Biomaterials 23, 1417-1423, 2002, discloses covalently attached 3-(trimethoxysilyl)-propyldimethyloctadecyl ammonium chloride to silicone rubber via a reaction carried out at 80 °C during 20 h using water as a solvent. The coating reduced the viability of adherent staphylococci from 90% to 0%, and of Gram-negative bacteria from 90% to 25%.

Nikawa, H. et al. Immobilization of Octadecyl Ammonium Chloride on the Surface of Titanium and Its Effect on Microbial Colonization In Vitro. Dent. Mater. J. 24, 570-582, 2005, discloses. grafting a 3-(trimethoxysilyl)-propyldimethyloctadecyl ammonium chloride on titanium via Ti-O-Si coupling at 25°C utilizing water as a solvent. The microbial adherence and biofilm formation on the modified titanium surface was found significantly reduced.

The prior art suggests that the successful direct linkage of Si-QAC compounds to the surfaces has two prerequisites: the presence on the surfaces on hydroxyl anchoring groups and surface-grafting conditions that often require high temperatures, long reaction time, strong acidic pH or organic solvents.

Even when these prerequisites are met, depending on the type of surface and the density of hydroxyl groups, the capacity of Si-QAC-coated surfaces to reduce the bacterial load is often far from optimal.

Moreover, the reaction conditions, as disclosed in the prior art, limit the applicability of Si-QACs, for instance in the field of in-situ cleaning and disinfection procedures of indoor hard-surfaces such as furniture, ceilings and floor.

Therefore, strategies to enhance the binding of Si-QACs to different types of surfaces by pre-activation of the surfaces were developed. Numerous materials, indeed, lack functional groups that are suitable for a direct linkage of Si-QACs.

For instance, polyethylene, polypropylene and polystyrene are among the most used synthetic polymers and they have no inherent functional groups that can be used for covalent linkage. In these cases, pre-activation is needed.

A pre-activation strategy, argon plasma treatment was proposed by Gottenbos, B., van der Mei, H. C., Klatter, F., Nieuwenhuis, P. & Busscher, H. J. In vitro and in vivo antimicrobial activity of covalently coupled quaternary ammonium silane coatings on silicone rubber. Biomaterials 23, 1417-1423, 2002, as a surface pretreatment in order to maximize the adhesion properties of 3(trimethoxysilyl)propyldimethyloctadecylammonium chloride onto silicon rubber. Additionally, the oxidized surfaces were cured with 3(trimethoxysilyl)propyldimethyloctadecylammonium chloride under high temperature for a prolonged period of time (80°C for 20 hours) to increase the binding of the antimicrobial compound to the surface.

Air-ozonolysis was reported as an effective method for surface activation of polyethylene- and polystyrene-based films. Ozone induced oxidation, leading to the formation of carboxylic groups that were then reduced to hydroxyl groups with NaBH4 or LiAlH4. The subsequent coupling of Si-QAC to the hydroxylated material was then performed for 24h at 50°C. The antimicrobial activity of the coated surfaces correlated with Si-QACs densities on their surfaces and demonstrated 6.6 and 3.1 log CFU reduction for polystyrene and polyethylene, respectively (Fadida, T. et al. Air-ozonolysis to generate contact active antimicrobial surfaces: activation of polyethylene and polystyrene followed by covalent graft of quaternary ammonium salts. Colloids Surf. B. Biointerfaces 122, 294-300, 2014).

An electrochemical method was used to activate stainless steel. Electrodeposition of phenol p-diazonium salt was utilized as a source of OH moieties on the material surface. This method allowed a covalent linkage of 3-(trimethoxysilyl) propyl dimethyloctadecyl ammonium chloride. The entire reaction took place in water and resulted in effective antimicrobial stainless-steel surfaces, which were shown to be active against Gram negative, and Gram positive bacteria species. Nearly total killing of E. Coli, B. cereus and multidrug resistant to P. aeruginosa was observed (Khaskin, E. et al. A contact active bactericidal stainless steel via a sustainable process utilizing electrodeposition and covalent attachment in water. Green Chem. 17, 2344-2347, 2015).

An alternative to pre-treatment is the surface deposition of Si-QAC-coated nanoparticles as $CaCl_2$ cross-linked alginate nanoparticles, modified on the surface with trimethoxysilylpropyl octadecyldimethyl ammonium chloride. The formed nanoparticles were covalently linked to hydroxyl groups of cotton fabrics that showed more than 99.99% reduction in viable cell counts of E. Coli and S. Aureus bacteria (Kim, H. W., Kim, B. R. & Rhee, Y. H. Imparting durable antimicrobial properties to cotton fabrics using alginate-quaternary ammonium complex nanoparticles. Carbohydr. Polym. 79, 1057-1062, 2010).

Was reported covalent binding of (trimethoxysilyl)-propyldimethyloctadecyl ammonium chloride to the surface of silica nanoparticles. The Si-QAC-modified silica nanoparticles were then grafted on glass surface, displaying an average number of viable and adhering bacteria of 3.4%, 1.5%, and 0.4% for E. Coli, S. Aureus, and D. Geothermalis, respectively (Song, J., Kong, H. & Jang, J. Bacterial adhesion inhibition of the quaternary ammonium functionalized silica nanoparticles. Colloids Surfaces B Biointerfaces 82, 651-656, 2011).

## Closest prior art

DAOOD U ET AL: "An in vitro study of a novel quaternary ammonium silane endodontic irrigant", DENTAL MATERIALS, ELSEVIER, AMSTERDAM, NL, vol. 35, no. 9, 2019, pages 1264-1278 investigate the action of a liquid formulation containing NaOCl and 1-octadecanaminio, N, N '- [[3,3-bis [[[3- (dimethyloctadecylammonium) propyl] dihydroxysilyl] oxy] -1,1, 5,5, -tetrahydroxyl-1,5-trisiloxanediyl] di-3,1-propanedyl] -bis [N, N-dimethyl] chloride for endodontic irrigations in the treatment of infections due to Enterococcus Faecalis biofilms. In this solution both hypochlorite and 1-octadecanaminio, N, N '- [[3,3-bis [[[3-(dimethyloctadecylammonium) propyl] dihydroxysilyl] oxy] -1,1,5,5, -tetrahydroxy1-1,5 -trisiloxanediyl] di-3,1-propandyl] -bis [N, N-dimethyl] exert an antimicrobial action against Enterococcus faecalis. In particular, NaOCl is in a concentration being active as antimicrobial agent.
European patent. N. EP0129980 discloses the combination of hypochlorite in high concentrations (up to 12%) with an organosilicon quaternary ammonium compound and other compounds, all together acting as disinfectant agents.
European patent. N. EP3818827 discloses an aqueous composition comprising hypochlorous acid and an organosilicon quaternary ammonium compound, in particular 3- (trimethoxysilyl) propyldimethyl octadecyl ammonium ion/chloride or 3- (trihydroxysilyl) propyldimethyl octadecyl ion/chloride which is applied to surfaces and the compound of quaternary ammonium organosilicon binds to it to provide the long lasting effect.
Us patetn n. US4847088 discloses an antimicrobial composition comprising 3- (trimethoxysilyl) propyldimethyl octadecyl ammonium chloride and tannic acid, for treating substrates such as paper or cellulosic fiber substrates.

## Technical problem

It is clear from the prior art that there is strong felt need for composition preventing microbial infections without the release of antimicrobial agents, because biocides cause environment pollution and promote the development of bacteria resistance mechanisms.
Surface coatings avoid releasing of the antimicrobial agents. These coatings should be durable on the surface since it is the key for the long-term protection against pathogenic species. Durability is strictly related to the ability of the silane base to strongly bind the surface.
Silane base can bond to the surface owning hydroxyl groups by means of alkoxysilanes, which are coupling agents that can form Si-O bonds with hydroxyl groups.
The bounding capability depends on the chemical nature of the surfaces and the density of the hydroxyl groups on it, the latter determining the concentration of surface-bound Si-QAC and, consequently, the capacity to inhibit bacteria growth.
One of the disadvantages of Si-QACs is their poor antimicrobial efficacy on certain materials where hydroxyl groups are not or are poorly available and a high extent of surface-to-surface variability.
Already known solution are pre-treatment and nanoparticles grafting enhancing Si-QAC surface binding, Si-QAC concentration at the surface and Si-QAC antimicrobial activity. However, these strategies are costly, technically complex, and hard to apply to large surfaces, making pre-treatment and nanoparticles grafting poorly suitable techniques in the field of in-situ cleaning and disinfection.
Therefore, the present invention found a readily available, simple to apply, safe and effective way to enhance the grafting of Si-QACs to surfaces and to increase Si-QAC concentration at the surface by in-situ application of safe-to-use and cost-effective treatments.
In the present invention, Si-QAC is together with a curing agent accelerating the polymerization of the antimicrobial film and therefore improving its adhesion to surfaces and antimicrobial properties. The curing agent is used in low concentration and do not exert any antibacterial activity. Furthermore, Si-QAC and the curing agent are applied in a two-steps procedure, where the Si-QAC is first deposited onto the surfaces and allowed to dry, subsequently, the curing agent is applied, and the antimicrobial activity measured when the surfaces are completely dry and cured.
The main feature which differentiates the present invention from the closest prior art is that hypochlorite acts as a crosslinker/curing agent for the silane and not as an antibacterial agent, in fact the amount used is lower than any concentration necessary to exert an antibacterial activity. Furthermore, the antimicrobial activity of the surfaces is assessed upon surface drying. Being the mechanism of action of hypochlorite as an antimicrobial agent based on the direct contact of chlorine with the microbe, the evaporation of the hypochlorite from the surfaces during the drying phase excludes the possibility for such agent to be active against microbes.
Film formation onto surfaces with low wettability (glass, steel, aluminium etc.) can be also improved by the pre-treatment of the surfaces or co-formulation of Si-QAC with wetting agents and/or primers.

## Object of the invention

The above technical problem is solved by providing an antimicrobial liquid composition comprising at least one

quaternary ammonium silicone compound (Si-QAC) and at least one curing agent and optionally further comprising a wetting agent and/or at least one primer and/or a cross-linker being a polyphenol containing at least two hydroxyl groups.

A further object of the present invention is a kit for subsequent use consisting of:

a first liquid composition comprising at least one quaternary ammonium silicone compound (Si-QAC) and optionally at least one wetting agent and/or at least one primer

a second liquid composition comprising at least one curing agent and optionally further comprising at least one cross-linker being a polyphenol containing at least two hydroxyl groups.

Another object of the present invention is the use of the above composition and kit for cleaning and/or disinfecting surfaces, more preferably for the long-term antimicrobial protection of hard surfaces, more preferably indoor hard surfaces.

A further object of the present invention is a method for cleaning and/or disinfecting surfaces, preferably for the long-term antimicrobial protection of hard surfaces, comprising the following steps:

a) adding to the surface a first liquid composition comprising at least one quaternary ammonium silicone compound (Si-QAC) and optionally at least one wetting agent and/or at least one primer

b) adding to the surface as obtained at the end of step a) a second liquid composition comprising at least one curing agent and optionally further comprising at least one cross-linker being a polyphenol containing at least two hydroxyl groups

wherein upon the addition each aqueous solution the surfaces are allowed to dry at room temperature for at least two hours, optionally comprising an additional step a') before step a) of disinfecting the surface with an aqueous solution of at least one alcohol.

Further features of the present invention will be clear from the following detailed description with reference to the attached drawings and experimental data provided.

## Brief description of drawings

Fig 1 shows 1H-NMR spectra.

Fig 2 shows spectra by FTIR spectroscopy.

Fig 3 shows 1H-NMR spectra.

## Detailed description of the invention

Within the meaning of the present Si-QACs compounds are quaternary ammonium silicone compounds (Si-QAC) acting as surface-bound antimicrobials, also named non-migrating antimicrobials. Non-migrating antimicrobial compound means a chemical compound able to bind to surfaces by covalent interaction and to kill microorganisms by a direct contact mechanism, wherein when the non-migrating antimicrobial compound irreversibly binds to the surfaces, a durable bio-barrier against microbial contamination is formed. The chemical structure comprises a quaternary ammonium compound base linked to a hydrophobic linear C12-C18 alkyl chain (QAC base) which is responsible for the antimicrobial activity and an organo-silane group, responsible for the irreversible binding of the Si-QAC compounds to the surfaces by a mechanism of hydrolysis and condensation. 3-(trimethoxysilyl) propyldimethyl octadecyl ammonium chloride belongs to said family.

Within the meaning of the present invention a crosslinking agent is a polyphenol containing at least two hydroxyl groups capable to increase the concentration of Si-QAC to the surfaces, as the cross-linking agent has the ability to covalently bind a large number of Si-QAC molecules, expanding the possibility of the surfaces with a low hydroxyl group density to have a high concentration of antimicrobial molecules.

Within the meaning of the present invention a curing agent is a compound capable to activate the surface by chlorination and hydroxylation so that the surface can form stable covalent bonding with Si-QAC, by catalysing Si-O-Si condensation reaction to stabilize Si-QAC coating at the surface, by physical entrapment and possible crystallization of NaOCl within the Si-QAC network, which prolongs the residence of the antibacterial compound at the surface, thus enhancing adherence, durability and antimicrobial effectiveness of Si-QAC coatings.

Within the meaning of the present invention a primer is a chemical compound applied on the outer surface of

a substrate to the scope of increasing the surface binding properties of Si-QAC. The primer can be applied onto the surface prior to Si-QAC deposition or co-formulated with Si-QAC.

Within the meaning of the present invention the non-migrating antimicrobial compound is effective against gram-positive and gram-negative bacteria, viruses, fungi algae, mold, yeast and protozoa parasites and biofilms. The gram positive bacteria can be Bacillus sp. (vegetative cell), Corynebacterium diptheriae, Micrococcus lutea, Micrococcus sp., Mycobacterium tuberculosis, Mycobacterium Smegmatis, Propionibacterium acnes, Streptococcus faecalis, Streptococcus mutans, Streptococcus pneumonia, Streptococcus pyogenes, Bacillus cereus, Alicyclobacillus acidoterrestris, Staphylococcus aureus, Staphylococcus enteritis, Bacillus anthraces (anthrax), Bacillus atrophaeus spores, Listeria monocytogenes, Lactobacillus, Bacillus subtilis, Rothia dentocariosa, Staphylococcus epidermidis, Streptococcus salivarius, Deinococcus geothermalis, Brochothrix thermosphacta. The gram-negative bacteria can be Acinetobacter calcoaceticus, Acinetobacter johnsoni, Aeromonas hydrophilia, Citrobacter deversus, Citrobacter freundi, Enterobacter aerogenes, Enterobacter aglomera, Escherichia coli , Klebsiella Oxytoca, Klebsiella pneumoniae, Klebsiella terriena, Legionella pneumophila, Morganella morganii, Proteus mirabilis, Proteus vulgaris, Pseudomonas fluorescens, Salmonella cholera suis, Salmonella typhi, Salmonella typhimurium, Serratia liquifaciens, Xanthomonas campestris, Pseudomonas aeruginosa, Shewanella loihica, Salmonella sp., Clostridium difficile spore, Clostridium perfringen, Clostridium botulinum, Shigella, Salmonella enterica, Pseudomonas fragi, Pseudomonas lundensis, Campylobacter jejuni, Vibrios cholera including serotypes O1 and non 01, Vibrio parahaemolyticus, Vibrio vulnificus, Yersinia enterocolitica, Yersinia pseudotuberculosis, Moraxella, Psychrobacter immobilis, Shewanella putrefaciens, Serratia. Viruses can be Adenovirus Type II, Adenovirus Type IV, Bovine Adenovirus Type I, Bovine Adenovirus Type IV, Feline pneumonitis, Herpes Simplex Type I, Herpes Simplex Type II, HIV-1(AIDS), Influenza A2 (Asian), Influenza B, Mumps, Parinfluenza (Sendai), Reovirus Type I, Influenza A2 (Aichi), Simian Virus 40, Vaccinia, PRD1 bacteriphage, H5N1 avian influenza virus, MS2 Coliphage, Poliovirus type 3. Fungi, algae, mold, yeast can be Candida tropicalis, Candida albicans, Mites, Aspergillus niger fungi, Algae, Gliomastix cerealis, Epidermophyton sp., Dreschslera australiensis, Chlorella vulgaris, Cladosporium cladosporioides, Candida pseudotropocalis, Aureobasidium pullans, Aspergillus verrucaria, Aspergillus versicolor, Aspergillus terreus, Aspergillus sydowi, Gloeophyllum trabeum, Microsporum sp., Microsporum audouinii, Monilia grisea, Oscillatoria, Penicillium chrysogenium, Pencillium commune, Penicillium finiculosum, Penicillium pinophiliumn, Penicillium variable, Phoma fimeti, Pithomyces chartarum, Poria placenta, Scenedesmus, Saccharonyces cerevisiae, Scolecobasidium humicola, Trichoderma viride, Trichophyton interdigitale, Trichophyton maidson, Trichophyton mentogrophytes, Trichophyton sp, Alterania alternate, Aphanizomenon sp., Aspergillus flavus, Chaetomium globosum fungi, Aureobasidium pullulans funi, Trichoderma virens (fungi). Protozoa parasites can be Cryptosporidium parvum (oocysts), Giardia.

Within the meaning of the present invention wetting means the ability of a liquid to maintain contact with a solid surface. Surfaces with low wettability are, for example: glass, stainless steel, aluminium, metallic surfaces in general.

Therefore, within the meaning of the present invention a wetting agent is a compound improving contact between a liquid and a solid surface by reducing surface tension, such as surfactants with wetting properties.

Object of the present invention are an antimicrobial liquid composition comprising at least one quaternary ammonium silicone compound (Si-QAC) and at least one curing agent and optionally further comprising a wetting agent and/or at least one primer and/or a cross-linker being a polyphenol containing at least two hydroxyl groups, and
a kit for subsequent use consisting of:

a first liquid composition comprising at least one quaternary ammonium silicone compound (Si-QAC) and optionally at least one wetting agent and/or at least one primer

a second liquid composition comprising at least one curing agent and optionally further comprising at least one cross-linker being a polyphenol containing at least two hydroxyl groups.

Preferably the quaternary ammonium silicone compound (Si-QAC) is selected from the group consisting of: 3-(trimethoxysilyl)propyldimethyloctadecyl ammonium; 3-(trimethoxysilyl)propyldimethyloctadecyl ammonium chloride, 3-(trihydroxysilyl)propyldimethyloctadecyl ammonium ion, or 3-(trihydroxysilyl)propyldimethylocta-decyl ammonium chloride.

More preferably the quaternary ammonium silicone compound (Si-QAC) is 3-(trimethoxysilyl) propyldimethyl octadecyl ammonium chloride.

Preferably the curing agent is selected from the group consisting of: hypochlorous acid and salts thereof, chlorine dioxide, sodium dichloroisocyanurate, chloramine-T, halazone, chlorhexidine.

More preferably the curing agent is hypochlorous acid, sodium hypochlorite, calcium hypochlorite.

Preferably the cross linker being a polyphenol containing at least two hydroxyl groups is selected from the group consisting of: tannic acid, stilbenes (i.e. rhapontin, resveratrol, pinosylvin), cinnamic acid (i.e caffeic acid, caffeic acid 1,1-dimethylallyl ester, chicoric acid, cinnamyl-3,4-dihydroxy-$\alpha$-cyanocinnamate, 2,4-dihydroxycinnamic acid, ethyl 3,4-dihydroxycinnamate, chlorogenic acid, CU-CPT22 acid), benzoic acids (i.e. butyl gallate, ethyl 3,5-dihydroxybenzoate, 3,4-dihydroxy-benzoic acid methyl ester, 2,4-dihydroxy-3,6-dimethylbenzoic acid, isopropyl 3,4,5-trihydroxybenzoate, methyl 3,5 dihydroxybenzoate), flavonoids (i.e cardamonin, dihydromyricetin, diosmin, epigallocatechin gallate, myricetin, myricitrin, quercetin 3-β-D-glucoside, rutin, silibinin, taxifolin, wedelolactone), coumarins (i.e. baicalein, 3',5'-dihydroxyflavone, 5,7-dihydroxy-4-phenylcoumarin, 5,7-dihydroxy-4-propylcoumarin, 5,7-dihydroxy-4-methylcoumarin) and naphtoquinones (i.e. 5,8-dihydroxy-1,4-naphthoquinone, 2,3-dichloro-5,8-dihydroxy-1,4-naphthoquinone).

More preferably cross linker being a polyphenol containing at least two hydroxyl groups is tannic acid.

Preferably the primer is selected from the group consisting of epoxy resins, for example bisphenol-based epoxy resins, novolacks, aliphatic epoxy resins, halogenated epoxy resins, epoxy diluents, glycidylamine epoxy resins, hardened with polyamines curing agents.

Preferably the wetting agent is an ethoxylated alcohols with linear alkyl chain C9-C16.

Preferably the quaternary ammonium silicone compound (Si-QAC) is present in an amount up to 10% v/v, preferably comprised between 1 and 10% v/v.

Preferably the curing agent is present in an amount comprised between 0,1 and 6% v/v or w/v more preferably 0,1-5% v/v or w/v, 1-6% v/v or w/v, 0,1-5% v/v or w/v

Preferably the cross linker being a polyphenol containing at least two hydroxyl groups is present in an amount comprised between 0.01 and 0.5% w/w.

Another object of the present invention is the use of the above composition and kit for cleaning and/or disinfecting surfaces.

Another object of the present invention is the use of the above composition and kit for the long-term antimicrobial protection of hard surfaces.

Preferably hard surfaces are indoor surfaces, more preferably non-porous surfaces, more preferably amine- and hydroxyl-bearing surfaces.

A further object of the present invention is a method for cleaning and/or disinfecting surfaces, preferably for the long-term antimicrobial protection of hard surfaces, comprising the following steps:

a) adding to the surface a first liquid composition comprising at least one quaternary ammonium silicone compound (Si-QAC) and optionally at least one wetting agent and/or at least one primer
b) adding to the surface as obtained at the end of step a) a second liquid composition comprising at least one curing agent and optionally further comprising at least one cross-linker being a polyphenol containing at least two hydroxyl groups

wherein upon the addition each aqueous solution the surfaces are allowed to dry at room temperature for at least two hours.

Optionally, the method for cleaning and/or disinfecting surfaces comprising an additional step a') before step a) of disinfecting the surface with an aqueous solution of at least one alcohol.

Preferably the alcohol is an alkyl alcohol, more preferably is selected from the group consisting of ethanol, methanol, propanol, isopropyl alcohol; most preferably is ethanol.

Preferably alcohol is in an amount comprised between 50 and 90% v/v.

Preferably in steps a') a) and b) the solutions are added manually or by electrospraying, the latter being preferred.

The solutions of the present invention can be used for cleaning and disinfection preferably for the long-term antimicrobial protection of indoor surfaces, but also for cleaning and disinfection of medical devices, cleaning and disinfection in food industry and cleaning and disinfection in water treatment.

In one embodiment of the present invention the solution is 1 ml Si-QAC solution in water at the concentration of 3.6% v/v or Si-QAC solution in water at the concentration of 3.6% v/v with 0.04% tannic acid w/v to deposit the antimicrobial agent and 1 ml sodium hypochlorite in water at the concentration of 1%.

## Examples

Example 1

All the chemicals were purchased from Merck (Darmstadt, Germany). 3-(trimethoxysilyl) propyldimethyl octadecyl ammonium chloride was provided by Devan Chemicals (Ronse, Belgium). Test surfaces were kindly provided by S2 Spa (Fermignano, Italy). Tannic acid was purchased from ACEF (Milan, Italy).

Specimens of testing surfaces were cut into squares of 50 × 50 mm and 10 mm max of thickness. They were superficially treated in three subsequent steps, using the following solutions:

a) 1 ml ethanol 70% v/v to clean and disinfect the surfaces

b) 1 ml Si-QAC solution in water at the concentration of 3.6% v/v or Si-QAC solution in water at the concentration

of 3.6% v/v supplemented with 0.04% tannic acid w/v to deposit the antimicrobial agent

c) 1 ml sodium hypochlorite in water at the concentration of 1% to cure the antimicrobial coating.

Upon the application of each solution, the surfaces were allowed to dry at room temperature for at least two hours. Surfaces prepared by the previously described procedure were compared to control surfaces, where only step 1 or step 1 and 2 were performed.

The measurement of the antibacterial activity on non-porous surfaces was performed according to the ISO 22196:2011 testing method (SO 22196:2011(en) Measurement of antibacterial activity on plastics and other non-porous surfaces. https://www.iso.org/obp/ui/#iso:std:iso:22196:ed-2:v1:en, 2011). Staphylococcus aureus ATCC 6538, batch number 929105, and Escherichia coli ATCC 8739, batch number 940161, were used as test strains. Specimens of Si-QAC coated and uncoated melamine wood were cut into squares of 50 $\times$ 50 mm of 10 mm max of thickness and used as test and control materials, respectively. The test was carried out in 5 replicates for each test material. A bacterial suspension was prepared at a concentration (ufc/ml) > 1,2 $\times$ $10^5$ for E. coli and for S. aureus. 0.4 ml of bacterial cell suspension (200 $\mu$l Escherichia Coli and 200 $\mu$l Staphylococcus Aureus) was pipetted on the surface of test specimen placed into a separate sterile Petri dish for each bacterial strain, with the test surface uppermost. The test inoculum was covered with a piece of inert film (polycarbonate film), and then the lid replaced on the Petri dish. Petri dishes containing the inoculated test specimens were incubated at a temperature of 35 $\pm$ 1°C and at a relative humidity of 90% for 24 $\pm$ 1 h. Next, 10 ml of neutralizer is added to the petri dish. A 10-fold serial dilution is performed on the neutralizer. The count of the viable bacteria recovered was performed, placing 1 ml of the recovered SCDLP from the test specimen and of each dilution into separate sterile Petri dishes. 15 ml of plate count agar was poured into each Petri dish. All petri dishes were incubated at a temperature of 35 $\pm$ 1°C and at a relative humidity of 90% for 48 h. Immediately after inoculation three untreated test specimens were processed in the same way. The value obtained from this bacterial count was used to determine the recovery rate of the bacteria from the test specimens under investigation. After incubation, for each test specimen, the number of viable bacteria recovered (cfu/surface) was determined and the antibacterial activity was calculated using the following Equation:

$$R = (U_t - U_0) - (A_t - U_0) = U_t - A_t$$

Wherein

R is the antibacterial activity;

$U_0$ is the average of the common logarithm of the number of viable bacteria, in cells/$cm^2$, recovered from the untreated test specimens immediately after inoculation.

Ut is the average of the common logarithm of the number of viable bacteria, in cells/$cm^2$, recovered from the untreated test specimens after 24 h.

At is the average of the common logarithm of the number of viable bacteria, in cells/cm2, recovered from the treated test specimens after 24 h.

The chemical structure of the Si-QAC coatings in the presence or not of sodium hypochlorite and/or tannic acid were characterized by proton nuclear magnetic resonance (1H-NMR, Varian Mercury plus 400, Crawley, UK) using deuterated chloroform (CD2Cl2) as solvent. Chemical shifts were referred to the solvent peak $\delta$ = 5.32 ppm for $CD_2Cl_2$.

Infrared spectra of the synthesized polymer were recorded by a Fourier transform infrared spectrophotometer (FT-IR, PerkinElmer, USA) at the wavelength range of 4000 - 500 cm. All the spectra were recorded against a background of an air spectrum.

Non-porous melamine wood surfaces were chosen as a model material because they represent an extremely common material in the furniture industry. When melamine (1, 3, 5-triamino-2, 4, 6-triazine) is combined with formaldehyde, at high temperatures, a hard and stiff thermosetting polymer is formed, which provides good properties and performance. It is an amino resin and has various material advantages, such as transparency, hardness, thermal stability, excellent boil resistance, scratch resistance, abrasion resistance, flame retardant, moisture resistance and surface smoothness, which lead to large industrial applications (Bajia, S., Sharma, R. & Bajia, B. Solid-State Microwave Synthesis of Melamine-Formaldehyde Resin. E-Journal Chem. 6, 807851, 2009). The chemical structure of melamine is shown in formula (I) and its poly-condensation resin is shown in formula (II).

(I)

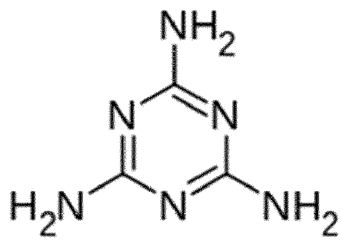

(II)

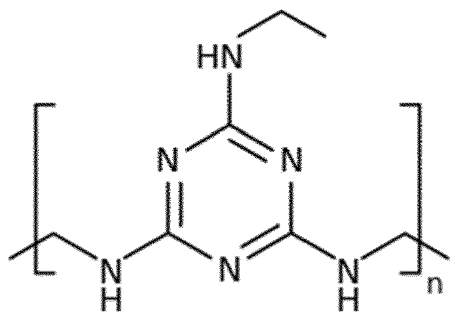

When Si-QAC water solution at the concentration of 3.6% v/v is applied to the surface of melamine resin, dipole-dipole interactions between the secondary amine groups of the substrate and the silanol groups of the antimicrobial agent can be established. The energy associated to this type of bonding is rather weak and displays poor potential to ensure a durable anchorage of the Si-QAC film to the surface and an effective antimicrobial efficacy. To study whether the deposition of Si-QAC on the melamine surfaces was sufficient to elicit an antimicrobial effect, ISO 22196:2011 testing was performed on uncoated and Si-QAC coated surfaces. It turned out that the antimicrobial efficiency of the treated surfaces was rather limited as compared to control surfaces, as overviewed in Table 1, sample number 1. The reduction of microbial load of Si-QAC-treated samples reached indeed a value of 25%, corresponding to a logarithmic antibacterial activity of 0.1, as compared to uncoated surfaces. The mechanical, thermal, and chemical stability of the Si-QAC coating on the melamine surfaces was also studied by ISO 22196:2011 method. Prior to testing the treated surfaces were subjected to stress conditions: superficial wash with 5 ml ethanol 70°C(EtOH wash), mechanical removal of the antibacterial coating by 10 subsequent superficial scratches performed with a dry cotton wipe (Scratch), and storage at 54°C for 7 days (54°C).

As detailed in the following table 1, sample numbers 2,3, and 4, no residual antimicrobial activity was recovered after chemical wash and mechanical stress, while a decrease in antimicrobial activity to 9.58% was observed for the thermal stress, corresponding to a logarithmic antibacterial activity of 0.04. These results lead us to the conclusion that the weak binding of Si-QAC to the melamine surface translates in poor antimicrobial efficacy of the coated surfaces and poor durability of the antimicrobial film.

Table 1

| Sample # | Sample name | **At (cells/cm$^2$)** | log At | R Antibacterial activity Ut - At | Reduction of microbial load **(%)** |
|---|---|---|---|---|---|
| 1 (*) | Si-QAC coated | 230,000 | 5.37 | 0.1 | 15 |
| 2 (*) | EtOH wash | 190,000 | 5.28 | -0.3 | - |
| 3 (*) | Scratch | 680,000 | 5.83 | -0.40 | - |

(continued)

| Sample # | Sample name | **At (cells/cm$^2$)** | log At | R Antibacterial activity Ut - At | Reduction of microbial load **(%)** |
|---|---|---|---|---|---|
| 4 (*) | 54°C | 250,000 | 5,40 | 0.04 | 9.58 |
| 5 (*) | Si-QAC+NaClO | 320 | 2.50 | 2.94 | 99.88 |
| 6 (†) | NaClO | 9,400,000 | 7.0 | -0.7 | - |
| 7 (*) | Si-QAC+NaClO 54°C | 650 | 2.8 | 4.0 | 99.99 |
| 8 (*) | Si-QAC+NaClO EtOH | 1,100 | 3.0 | 3.7 | 99.98 |

Wherein in table 1, (*) U0 (average of the common logarithm of the number of viable bacteria, in cells/cm2, recovered from the untreated test specimens immediately after inoculation) = 170,000 Log U0 = 5.24

Ut (average of the common logarithm of the number of viable bacteria, in cells/cm2, recovered from the untreated test specimens after 24 h) = 280,000
log Ut = 5.44

(†) U0 (average of the common logarithm of the number of viable bacteria, in cells/cm2, recovered from the untreated test specimens immediately after inoculation) = 210,000
Log U0 = 5.3

Ut (average of the common logarithm of the number of viable bacteria, in cells/cm2,

recovered from the untreated test specimens after 24 h) = 2,050,000
log Ut = 6.3

In an effort to improve the adhesion of Si-QAC to melamine surfaces, the application of a curing agent was introduced as an additional step upon the application Si-QAC compound. A water solution of sodium hypochlorite at the concentration of 0.9% was used as a curing agent. Interestingly, the surfaces treated with subsequent applications of Si-QAC and NaClO (Si-QAC+NaClO) showed excellent antimicrobial efficiency, with a dramatic enhancement of microbial load reduction percentage and logarithmic antimicrobial activity, that reached values of 99.88% and 2.94, respectively.

Although sodium hypochlorite and hypochlorous acid are well-known antimicrobial agents (Block, M. S. & Rowan, B. G. Hypochlorous Acid: A Review. J. Oral Maxillofac. Surg. 78, 1461-1466,2020), when applied to the surface in absence of Si-QAC and tested against E. Coli and S. Aureus strains, upon complete drying of the surfaces, they do not show any antibacterial activity, as displayed in Table 1, sample number 6. This finding suggests that the remarkable enhancement of the antibacterial properties of the tested surface is not due to the intrinsic antimicrobial properties of hypochlorous acid or sodium hypochlorite, but to a synergic chemical interaction between the two antimicrobials (Si-QAC and hypochlorous acid), leading to the formation of an extremely effective antimicrobial shield.

Additionally, durability studies on the generated superficial film revealed that the excellent antibacterial efficacy of the coating is preserved even after 7 days of ageing at 54°C and after superficial wash with 5 ml of ethanol 70° (table 1, sample number 7 and 8, respectively).

In order to gain more insight into the chemical nature and mechanism of action of the newly formed antimicrobial coating, given by the combination of Si-QAC and sodium hypochlorite or hypochlorous acid, the surfaces were characterized from a chemical point of view.

The hypothesis formulated to justify the improvement of the antimicrobial properties of the coating is that sodium hypochlorite or hypochlorous acid act on melamine surfaces with a triple mechanism of action.

By activation of the surfaces by chlorination and hydroxylation of melamine, according to the following scheme:

$$(Ar)2\text{-}NH + HOCl \leftrightarrow (Ar)2\text{-}N\text{-}Cl + (Ar)2\text{-}N\text{-}OH$$

The plausibility of the formation of such compounds is also supported by computational studies on different amine-bearing compounds ( Sakié, D., Hanzevacki, M., Smith, D. M. & Vrcek, V. A computational study of the chlorination and hydroxylation of amines by hypochlorous acid. Org. Biomol. Chem. 13, 11740-11752, 2015). The hydroxylated form

of melamine can then form stable covalent bonding with Si-QAC.

By catalysis of Si-O-Si condensation reaction and consequent stabilization of Si-QAC coating at the surface. To confirm this, the Si-QAC water solution at the concentration of 3.6% v/v was reacted at room temperature with the HOCl water solutio at the concentration of 1% v/v at a volume ratio of 1:1 to reproduce the same conditions occurring at the surfaces. In a timeframe of approximately 6 seconds, the formation of a thick white network of cross-linked Si-QAC is formed. The white solid material is isolated and dried at room temperature, then analysed by 1H-NMR (figure 1) and FTIR spectroscopy (figure 2).

By physical entrapment and possible crystallization of HOCl or NaClO within the Si-QAC network, which prolongs the residence of the antibacterial chlorinated compound at the surface. The presence of chlorinate species was confirmed by SEM analysis of the surfaces.

1H-NMR spectra showed that the isolated white material can be ascribed to the product of Si-QAC polycondensation, confirming the role of hypochlorous acid to act as a condensation catalyst. FTIR also confirmed the typical spectrum of crosslinked Si-QAC.

The presented results, highlight that diluted aqueous solutions of hypochlorous acid can enhance tremendously the adherence, durability and antimicrobial effectiveness of Si-QAC coatings on melamine surfaces, making the subsequent application of Si-QAC and HOCl to melamine surface a safe, cost-effective and easy-to-apply method for in situ disinfection of indoor surfaces.

The present methodology to coat and cure surfaces can potentially be extended to all types of amine-bearing surfaces and beyond, as hypochlorous acid has potential oxidation capacity on many types of surfaces, such as, as an example, polystyrene, polyethylene.

Incorporation of tannic acid

We further extended our studies, by exploring the possibility to increase the Si-QAC concentration at the surface through the co-formulation of Si-QAC with a crosslinker. Tannic acid of formula (III) was selected as a crosslinked because its chemical structure possesses a large number of hydroxyl groups (Figure 3), that can easily crosslink silanol groups of Si-QAC and because of its well-documented antibacterial activity (Dong, G. et al. Antimicrobial and anti-biofilm activity of tannic acid against Staphylococcus aureus. Nat. Prod. Res. 32, 2225-2228, 2018).

formula (III)

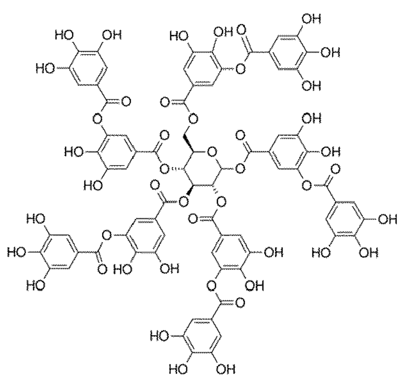

When Si-QAC and tannic acid were co-formulated in water at the concentration of 3.6% v/v and 0.05% w/v, respectively, no crosslinking was observed as the solution was stable over several days at room temperature and did not show increase of the viscosity. The supplementation of tannic acid to the Si-QAC solution conferred to the solution a slightly brown color, which was used as an indicator of chemical crosslinking of the polyphenol to the Si-QAC network. The Si-QAC water solution at the concentration of 3.6% v/v supplemented with tannic acid was reacted at room temperature with the HOCl water solution at the concentration of 1% v/v at a volume ratio of 1:1 to reproduce the same conditions occurring at the surfaces. The same condensation phenomenon observed previously in the absence of tannic acid occurred also in the presence of tannic acid. Additionally, the polycondensed Si-QAC network sequestered all the tannic acid present in solution, resulting in a brown-coloured solid material. Surprisingly, the water solution where the reaction occurred and that was initially brown turned in a very short timeframe of seconds into a completely transparent solution, leading to the conclusion that hypochlorous acid catalysed not only the condensation of Si-QAC but also the co-crosslinking of tannic acid to Si-QAC. This observed gross phenomenon was also studied by analytical techniques (1H-NMR, SEM and FTIR analyses), that confirmed the co-existence of polyphenol and organosylane compound in the

synthesized networks.

Figure 2 shows the FTIR analysis of the Si-QAC network polymerized by NaClO and cross-linked by tannic acid. The spectrum shows a strong absorption around 3600-3000 cm-1 with a wide and strong band centred at 3275 cm-1. This band overlaps with the band of the amine groups of melamine substrate and is assigned to the hydroxyl groups (O-H) H-bonded broad and strong and C-H (aromatic medium). Tannic acid contains some aromatic esters due to the signal characteristics of carbonyl groups C=O stretching (1714 cm-1) and C-O (1205 cm-1) Also, C=O stretching and C-O vibration observed near 1730- 1705 cm-1 and 1300-1100 cm-1 range respectively. The presence of cross-linked tannic acid is also demonstrated by 1H-NMR analysis of the Si-QAC network polymerized by NaClO and cross-linked by tannic acid (figure 3), where, compared to figure 1, typical peaks of aromatic hydrogens attributed to tannic acid appear at 7.0-7.5 ppm.

The grafting of tannic acid to Si-QAC networks increases the concentration of Si-QAC to the surfaces, as tannic acid has the ability to covalently bind a large number of Si-QAC molecules, expanding the possibility of the surfaces with a low hydroxyl group density to have a high concentration of antimicrobial molecules.

Furthermore, as all the three combined molecules (tannic acid, Si-QAC and hypochlorous acid) have intrinsic antimicrobial activity, the superficial film derived from the chemical binding thereof result in synergistic antimicrobial activity.

Example 2

Assessment of the long-term antimicrobial efficacy of Halos-coated melamine surfaces.

Preparation of the antimicrobial surfaces: Melamine surfaces of 50 × 50 mm dimensions and 10 mm thickness, were taken as standard surfaces, representing non-porous and commonly used materials in indoor domestic, public, and industrial environments. Each surface was first disinfected with alcohol 70% and subsequently coated by manual application of 1 ml Si-QAC 5%v/v solution and 1 ml of 5% v/v sodium hypochlorite. Upon a drying period of two hours, the excess of unbound Si-QAC 5%v/v was removed, and the prepared surfaces (ten replicates for control and treated surfaces) were tested for their antimicrobial activity.

Antimicrobial properties assessment: The antimicrobial properties of the surfaces were assessed according to ISO 22196: 2011 method. Non-coated surfaces were taken as negative control.

Test strains: Staphylococcus aureus ATCC 6538, Escherichia coli ATCC 8739

Testing conditions: Contact time: 24 h ± 1 h

Diluent: Nutrient Broth 1/500 for strains preparation

Phosphate-buffered physiological saline: 0.85% of sodium chloride

Neutralizer: SCDLP broth

17,0 g of casein peptone, 3,0 g of soybean peptone, 5,0 g of sodium chloride, 2,5 g of disodium hydrogen phosphate, 2,5 g of glucose and 1,0 g of lecithin in 1 000 ml of distilled or deionized water.

Incubation medium: Tryptic Soy Agar (TSA)

Incubation of the inoculated test specimens: 35°C ± 1°C, 90% relative humidity for 24 h ± 1 h, damp condition

Incubation of the plates for the viable bacteria count: 35°C + 1°C, 90% relative humidity for 48 h

Procedure for evaluating the antibacterial activity on non-porous surfaces according to ISO 22196:
A bacterial suspension was prepared at a concentration (ufc/ml) > 1,0 x 106 for E. coli and for S. aureus.

0.4 ml of bacterial cell suspension (200 μl Escherichia Coli and 200 μl Staphylococcus Aureus, bacterial concentration about 106 ufc/ml) was pipetted on the surface of test specimen placed into a separate sterile Petri dish for each bacterial strain, with the test surface uppermost.

The test inoculum was covered with a piece of inert film (polycarbonate film), as described in ISO 22196:2011 and then the lid replaced on the Petri dish.

Petri dishes containing the inoculated test specimens were incubated at a temperature of 35 ± 1°C and at a relative humidity of 90% for 24 ± 1 h. Next, 10 ml of neutralizer is added to the petri dish. A 10-fold serial dilution is performed on the neutralizer. The count of the viable bacteria recovered was performed, placing 1 ml of the recovered

SCDLP from the test specimen and of each dilution into separate sterile Petri dishes. 15 ml of plate count agar were poured into each Petri dish. All petri dishes were incubated at a temperature of 35 ± 1°C and at a relative humidity of 90% for 48 h.

Immediately after inoculation three untreated test specimens were processed in the same way.

The value obtained from this bacterial count was used to determine the recovery rate of the bacteria from the test specimens under investigation.

After incubation, for each test specimen, the number of viable bacteria recovered (cfu/surface) was determined and the antibacterial activity was calculated using Equation:

$$R = (Ut - U0) - (At - U0) = Ut - At$$

Where: R is the antibacterial activity; U0 is the average of the common logarithm of the number of viable bacteria, in cells/$cm^2$, recovered from the untreated test specimens immediately after inoculation;

Ut is the average of the common logarithm of the number of viable bacteria, in cells/cm2, recovered from the untreated test specimens after 24 h;

At is the average of the common logarithm of the number of viable bacteria, in cells/cm2, recovered from the treated test specimens after 24 h.

Table 2

| Sample | At **(cells/$cm^2$)** | **log $A_t$** | R Antibacterial activity **$U_t$** -At | Reduction of microbial load **(%)** |
|---|---|---|---|---|
| Melamine | 630 | 2.8 | 3 . 5 | 99.97 |

Table 3

| $U_0$: Average of the common logarithm of the number of viable bacteria, in cells/$cm^2$, recovered from the untreated test specimens immediately after inoculation | Ut = average of the common logarithm of the number of viable bacteria, in cells/$cm^2$, recovered from the untreated test specimens after 24 h |
|---|---|
| 680,000 | 2,100,000 |
| log $U_0$ = 5.8 | log Ut = 6.3 |

On the basis of data collected and shown in tables 2 and 3, the melamine surfaces treated with Si-QAC 5%v/v and sodium hypochlorite 5% v/v show excellent antibacterial properties against strains of Staphylococcus Aureus ATCC 6538 and Escherichia Coli ATCC 8739.

Example 3

Assessment of the long-term antimicrobial efficacy of Si-QAC 5%v/v - coated leather surfaces.

Preparation of the antimicrobial surfaces: Polyester-coated leather surfaces of 50 × 50 mm dimensions and 2 mm thickness were taken as standard surfaces, representing non-porous and commonly used materials in indoor domestic, public, and industrial environments. Each surface was first disinfected with alcohol 70% and subsequently coated by manual application of 1 ml Si-QAC 5%v/v solution and 1 ml of sodium hypochlorite 1%. Upon a drying period of two hours, the excess of unbound Si-QAC 5%v/v was removed, and the prepared surfaces (ten replicates for control and treated surfaces) were tested.

Antimicrobial properties assessment:the antimicrobial properties of the surfaces were assessed according to ISO 22196: 2011 method. Non-coated surfaces were taken as negative control.

Test strains: Staphylococcus aureus ATCC 6538, batch number 929105, expiry date 29/07/2021; Escherichia coli ATCC 8739, batch number 940161, expiry date 18/08/2021

Testing conditions: Contact time: 24 h ± 1 h

Diluent: Nutrient Broth 1/500 for strains preparation

Phosphate-buffered physiological saline: 0.85% of sodium chloride

Neutralizer: SCDLP broth

17,0 g of casein peptone, 3,0 g of soybean peptone, 5,0 g of sodium chloride, 2,5 g of disodium hydrogen phosphate, 2,5 g of glucose and 1,0 g of lecithin in 1 000 ml of distilled or deionized water.

Incubation medium: Tryptic Soy Agar (TSA)

Incubation of the inoculated test specimens: 35°C ± 1°C, 90% relative humidity for 24 h ± 1h, damp condition

Incubation of the plates for the viable bacteria count: 35°C ± 1°C, 90% relative humidity for 48 h

Procedure for evaluating the antibacterial activity as above.

Table 4

| Sample | At (cells/cm$^2$) | log At | R Antibacterial activity $U_t$ -$A_t$ | Reduction of microbial load (%) |
|---|---|---|---|---|
| Leather | 3400 | 3.5 | 2.7 | 99.8 |

Table 5

| $U_0$: Average of the common logarithm of the number of viable bacteria, in cells/cm$^2$, recovered from the untreated test specimens immediately after inoculation | Ut = average of the common logarithm of the number of viable bacteria, in cells/cm$^2$, recovered from the untreated test specimens after 24 h |
|---|---|
| 640,000 | 1,700,000 |
| log $U_0$ = 5.8 | log Ut = 6.2 |

On the basis of data collected and shown in tables 1 and 2, the polyester-coated leather surfaces coated with Si-QAC 5%v/v show good antibacterial properties immediately after coating with Halos and sodium hypochlorite against strains of Staphylococcus Aureus ATCC 6538 and Escherichia Coli ATCC 8739.

On the basis of data collected and shown in tables 4 and 5, the melamine-based surfaces coated with Si-QAC 5%v/v show excellent antibacterial properties immediately after coating (Halos T0) against strains of Staphylococcus Aureus ATCC 6538 and Escherichia Coli ATCC 8739 The accelerated stability testing, carried out according to Cipac MT 46.3 guidelines, revealed that the Si-QAC 5%v/v -coated surfaces stored for 21 days at 54°C display similar antibacterial activity compared to Group 1. According to the standard guide ASTM F1980-16 and considering an ageing factor (Q10) of 2.0, it is possible to estimate that the antibacterial coating on the tested surfaces (HalOs 180 days) is stable and active for at least 180 days at the ambient temperature of 23°C.

Example 4

Assessment of the antimicrobial efficacy of Si-QAC-coated melamine surfaces when superficially cleaned with common cleaning agents.

Preparation of the antimicrobial surfaces: Melamine surfaces of 50 x 50 mm dimensions and 10 mm thickness, were taken as standard surfaces, representing hard, non-porous and commonly used materials in indoor domestic, public, and industrial environments. Each surface was first disinfected with alcohol 70% and divided into 7 groups, each composed of ten replicates:

a) Group 1: the surfaces were treated with 1.5 ml of 0.9% ammonia solution

b) Group 2: the surfaces were treated with 1.5 ml of a 1% sodium hypochlorite solution

c) Group 3: the surfaces were coated with 1 ml of a 5% Si-QAC aqueous solution

d) Group 4: the surfaces were first coated with 1 ml Si-QAC 5%v/v; after complete drying of the coating, they were

treated with 1.5 ml of a 0.9% ammonia solution

d) Group 5: the surfaces were first coated with 1 ml Si-QAC 5%v/v; after complete drying of the coating, they were treated with 1.5 ml of a 1% sodium hypochlorite solution

e) Group 6: the surfaces were first coated with 1 ml Si-QAC 5%v/v; after complete drying of the coating, they were washed 30 times with 1.5 ml of a 1% sodium hypochlorite solution

f) Group 7: the surfaces were prepared in the same way as for Group 3 and stored at 54°C for 10 days, according to Cipac MT 46.3 guidelines for accelerated stability testing

Antimicrobial properties assessment: the antimicrobial properties of the group 1-7 surfaces were assessed according to ISO 22196: 2011 method. Non-coated surfaces were taken as negative control.

Test strains: Staphylococcus aureus ATCC 6538, batch number 929105, expiry date 29/07/2021; Escherichia coli ATCC 8739, batch number 940161, expiry date 18/08/2021.

Testing conditions:

Contact time: 24 h ± 1 h

Diluent: Nutrient Broth 1/500 for strains preparation, Phosphate-buffered physiological saline: 0.85% of sodium chloride

Neutralizer: SCDLP broth 17,0 g of casein peptone, 3,0 g of soybean peptone, 5,0 g of sodium chloride, 2,5 g of disodium hydrogen phosphate, 2,5 g of glucose and 1,0 g of lecithin in 1 000 ml of distilled or deionized water.

Incubation medium: Tryptic Soy Agar (TSA)- Incubation of the inoculated test specimens: 35°C ± 1°C, 90% relative humidity for 24 h ± 1 h, damp condition

- Incubation of the plates for the viable bacteria count: 35°C ± 1°C, 90% relative humidity for 48 h

Procedure for evaluating the antibacterial activity on non-porous surfaces according to ISO 22196:
A bacterial suspension was prepared at a concentration (ufc/ml) > 1,0 x 106 for E. coli and and for S. aureus.

0.4 ml of bacterial cell suspension (200 μl Escherichia Coli and 200 μl Staphylococcus Aureus, bacterial concentration about 106 ufc/ml) was pipetted on the surface of test specimen placed into a separate sterile Petri dish for each bacterial strain, with the test surface uppermost.

The test inoculum was covered with a piece of inert film (polycarbonate film), as described in ISO 22196:2011 and then the lid replaced on the Petri dish.

Petri dishes containing the inoculated test specimens were incubated at a temperature of 35 ± 1°C and at a relative humidity of 90% for 24 ± 1 h. Next, 10 ml of neutralizer is added to the petri dish. A 10-fold serial dilution is performed on the neutralizer. The count of the viable bacteria recovered was performed, placing 1 ml of the recovered SCDLP from the test specimen and of each dilution into separate sterile Petri dishes. 15 ml of plate count agar were poured into each Petri dish. All petri dishes were incubated at a temperature of 35 ± 1°C and at a relative humidity of 90% for 48 h.

Immediately after inoculation three untreated test specimens were processed in the same way.

The value obtained from this bacterial count was used to determine the recovery rate of the bacteria from the test specimens under investigation.

Antibacterial activity determined as above.

Table 6

| Sample | At (cells/cm$^2$) | log At | R Antibacterial activity $U_t$ -$A_t$ | Reduction of microbial load (%) |
|---|---|---|---|---|
| *Group 1* ($NH_3$) | 8,200,000 | 6.9 | -0.6 | - |

(continued)

| Sample | At (cells/cm$^2$) | log At | R Antibacterial activity $U_t$ -$A_t$ | Reduction of microbial load (%) |
|---|---|---|---|---|
| *Group 2* (NaClO) | 9,400,000 | 7.0 | -0.7 | - |
| *Group 3* (Si-QAC 5%v/v) | 430,000 | 5.6 | 0.7 | 78.90 |
| *Group 4* ( Si-QAC 5%v/v + $NH_3$) | 5,370,000 | 6.7 | -0.4 | - |
| *Group 5* ( Si-QAC 5%v/v + NaClO) | 330 | 2.5 | 3.8 | 99.98 |
| *Group 6* (Si-QAC 5%v/v + 30×NaClO) | 300 | 2.5 | 3.8 | 99.99 |
| *Group 7* ( Si-QAC 5%v/v + NaClO; 54°C) | 650 | 2.8 | 4.0 | 99.99 |

Table 7

| Uo: Average of the common logarithm of the number of viable bacteria, in cells/cm$^2$, recovered from the untreated test specimens immediately after inoculation | $U_t$ = average of the common logarithm of the number of viable bacteria, in cells/cm$^2$, recovered from the untreated test specimens after 24 h |
|---|---|
| 640,000 | 5,700,000 |
| log Uo = 5.8 | log Ut = 6.8 |

Table 8

| Uo: Average of the common logarithm of the number of viable bacteria, in cells/cm$^2$, recovered from the untreated test specimens immediately after inoculation | $U_t$ = average of the common logarithm of the number of viable bacteria, in cells/cm$^2$, recovered from the untreated test specimens after 24 h |
|---|---|
| 170,000 | 280,000 |
| log Uo = 5.24 | log Ut = 5.44 |

Table 9

| Uo: Average of the common logarithm of the number of viable bacteria, in cells/cm$^2$, recovered from the untreated test specimens immediately after inoculation | $U_t$ = average of the common logarithm of the number of viable bacteria, in cells/cm$^2$, recovered from the untreated test specimens after 24 h |
|---|---|
| 210,000 | 2,050,000 |
| log Uo = 5.3 | log Ut = 6.3 |

On the basis of data collected, the melamine-based surfaces, disinfected with Alcohol 70° and treated with solutions of ammonia 0.9% and sodium hypochlorite 1% show no antibacterial activity against the tested stains.

The surfaces coated with Si-QAC 5% v/v, show moderate antibacterial properties.

When the Halos-coated surfaces are washed with ammonia, the antimicrobial activity dramatically decreases, while the superficial treatment with sodium hypochlorite significantly enhances the biocidal properties of the coating. Both 1 and 30 superficial washes with hypochlorite are equally effective at boosting the coating capacity to kill bacteria.

The accelerate stability testing, carried out according to Cipac MT 46.3 guidelines, revealed that the Si-QAC 5%v/v -coated surfaces, treated with hypochlorite, stored for 10 days at 54°C display similar antibacterial activity compared to the freshly prepared surfaces. According to the standard guide ASTM F1980-16 and considering an ageing factor (Q10) of 2.0, it is possible to estimate that the antibacterial coating on the tested surfaces is stable and active for at least 3 months.

Example 5

Measurement of antibacterial activity of si-qac coatings at different concentrations and compositions

Test surfaces: n°90 samples of laminated wood, (dimensions: 50 x 50 mm of 10 mm max of thickness), first disinfected with alcohol 70% and subsequently divided into 3 groups, each treated with 1 ml of three different antibacterial solutions (denominated 5% (Si-QAC aqueous solution 5% v/v), 10% Si-QAC aqueous solution 10% v/v) and 5% + (Si-QAC aqueous solution 5% v/v supplemented with benzalkonium chloride)). The samples were dried at room temperature for 2 hours. Each group was then divided into 3 sub-groups of 10 replicates. One subgroup was analyzed as such, one was treated with 30 superficial washes with 1 ml of a 1% sodium hypochlorite water solution, one was treated with 30 superficial washes with 1 ml of a 0.9% ammonia water solution.

Control surfaces: n°10 samples of laminated wood (dimensions: 50 x 50 mm of 10 mm max of thickness) disinfected with alcohol 70%, but non treated with the antibacterial solutions were taken as negative control

n°10 samples of laminated wood (dimensions: 50 x 50 mm of 10 mm max of thickness) treated superficially with 1 ml of a 1% sodium hypochlorite water solution. Upon superficial treatment, the surfaces were dried at room temperature for at least 2 hours. The treatment was repeated 30 times.

n°10 samples of laminated wood (dimensions: 50 x 50 mm of 10 mm max of thickness) treated superficially with 1 ml of a 0.9% ammonia water solution. Upon superficial treatment, the surfaces were dried at room temperature for at least 2 hours. The treatment was repeated 30 times.

Type of sample: n°90 samples of laminated wood (dimensions: 50 x 50 mm of 10 mm max of thickness), first disinfected with alcohol 70% and subsequently divided into 3
groups, each treated with 1 ml of three different antibacterial solutions (denominated 5%, 10% and 5% +). The samples were dried at room temperature for 2 hours. Each group was then divided into 3 sub-groups of 10 replicates.

Three subgroups were analysed as such (5%, 10% and 5%+)

Three subgroups were treated with 30 superficial washes of 1 ml of a 1% sodium hypochlorite water solution (5% Cl2, 10% Cl2 and 5% + Cl2)

Three subgroups were treated with 30 superficial washes of 1 ml of a 0.9% ammonia water solution (5% NH3, 10%NH3, 5%+ NH3)

n°10 samples of laminated wood (dimensions: 50 × 50 mm of 10 mm max of thickness) disinfected with alcohol 70%, but non treated with any antibacterial solution were taken as negative control

n°10 samples of laminated wood (dimensions: 50 × 50 mm of 10 mm max of thickness) treated superficially with 1 ml of a 1% sodium hypochlorite water solution. Upon superficial treatment, the surfaces were dried at room temperature for at least 2 hours. The treatment was repeated 30 times (Cl2).

n°10 samples of laminated wood (dimensions: 50 × 50 mm of 10 mm max of thickness) treated superficially with 1 ml of a 0.9% ammonia water solution. Upon superficial treatment, the surfaces were dried at room temperature for at least 2 hours. The treatment was repeated 30 times (NH3) .

Test strains:Staphylococcus aureus ATCC 6538, batch number 929105, expiry date 29/07/2021, scherichia coli ATCC 8739, batch number 940161, expiry date 18/08/2021 as above.

Table 10

| $U_0$: Average of the common logarithm of the number of viable bacteria, in cells/cm$^2$, recovered from the untreated test specimens immediately after inoculation | Ut = average of the common logarithm of the number of viable bacteria, in cells/cm$^2$, recovered from the untreated test specimens after 24 h |
|---|---|
| 210,000 | 2,050,000 |
| log U0 = 5.3 | log Ut = 6.3 |

Table 11

| Sample | At (cells/cm$^2$) | log At | R Antibacterial activity Ut -At | Reduction of microbial load (%) |
|---|---|---|---|---|
| NH3 | 8,200,000 | 6.9 | -0.6 | - |
| Cl2 | 9,400,000 | 7.0 | -0.7 | - |
| 5% | 9,030,000 | 7.0 | -0.6 | - |
| 5% NH3 | 5,370,000 | 6.7 | -0.4 | - |
| 5% Cl2 | 430,000 | 5.6 | 0.7 | 78.90 |
| 10% | 850,000 | 5.9 | 0.4 | 58.44 |
| 10% NH3 | 950,000 | 6.0 | 0.3 | 53.90 |
| 10% Cl2 | 560,000 | 5.7 | 0.6 | 72.89 |
| 5% + | 330 | 2.5 | 3.8 | 99.98 |
| 5% + NH3 | 6,200 | 3.8 | 2.5 | 99.70 |
| 5% + Cl2 | 300 | 2.5 | 3.8 | 99.99 |

Based on data collected and shown in tables 1 and 2, the antibacterial surfaces treated with the antibacterial solutions 5% and 5% NH3, the 1% sodium hypochlorite solution and the 0.9% ammonia solution displayed no antibacterial activity against the tested bacterial strains. All the other surfaces showed a moderate to excellent antibacterial activity, depending on the superficial treatment applied.

As a general comment, the antibacterial treatments 5% +, 5% + NH3 and 5% + Cl2 showed the best performances. Superficial washes of the antibacterial surfaces with Cl2 resulted in a synergistic antibacterial effect between the two applied antibacterial agents.

Example 6

Measurement of antibacterial activity of disinfectants by suspension test method EN 1276

Sample description: - n°10 aqueous solutions of Si-QAC disinfectant agents, at the concentration from 5 to 10% v/v, or Si-QAC biocide supplemented with different ethoxylated alcohols as wetting agents (WA1, WA2, WA3) or a second antimicrobial agent (AG, benzalkonium chloride).7.5% (v/v) povidone iodine as control

Various methods have been developed to test the biocidal action of chemical disinfectants. Generally, suspension tests are relatively simple to perform compared with surface tests and 'field tests'. Therefore, they are often used in the early stages of disinfectant efficacy testing and in research. Suspension tests include preparation of the bacterial test

suspension, exposure to the disinfectant, neutralization or removal of the bactericidal component and estimation of the number of survivors.

Pre-cultivation of the test cultures in nutrient broth overnight is the easiest way of preparing the culture for bactericidal testing.

The EN 1276 standard specifies a suspension test for establishing whether a chemical disinfectant or antiseptic has bactericidal activity. Bactericidal or antimicrobial products are products manufactured to control and fight against certain populations of pathogenic microorganisms. The EN 1276 standard applies to products that are used in food, industrial, domestic, and institutional areas excluding areas and situations where disinfection is medically indicated and excluding products used on living tissues except for hand hygiene (such as hydroalcoholic gels) in the food, industrial, domestic, and institutional areas.

The EN 1276 is a quantitative suspension test for the evaluation of the bactericidal activity of antiseptics and chemical disinfectants used in the fields of food processing, industry, in the domestic and community fields.

Several microorganisms (Pseudomonas aeruginosa, Escherichia coli, Staphylococcus aureus and Enterococcus hirae) can be used to challenge the product

The microorganisms are exposed to the test solution under controlled conditions

The number of viable bacteria is determined. The reduction in viability is calculated

Type of sample: Test Material n°10 aqueous solutions of disinfectant products, all containing the Si-QAC biocide at the concentration from 5 to 10% v/v, or Si-QAC biocide supplemented with ethoxylated alcohols as wetting agents or

a second antimicrobial agent.

Test strains: - Escherichia coli ATCC 8739, batch number 940161, expiry date 18/08/2021

The test was carried out in 5 replicates for each sample.

To prepare bacterial test suspensions, loopfuls of cells from the working cultures were transferred into 15 ml of diluent, containing 1 g/l tryptone pancreatic digest of casein and

8.5 g/l sodium chloride at pH 7, which was placed in a 100-ml flask with 5 g of glass beads. The flask was shaken for 3 min using a mechanical shaker. The suspension was then aspirated from the glass beads and transferred into another tube. Using a nephelometer, the number of cells in the suspension was adjusted with diluent to approximately 1.5-

5×108 cfu/ml. These suspensions were used within 2 h.

For comparative purposes, in most experiments, the activity of a widely accepted antiseptic, 7.5% (v/v) povidone iodine was tested.

The neutralizing solution used to quench the activity of antiseptics was based on European standard EN 1276 and contained: 30 g/l Tween 80 (Sigma), 3 g/l lecithin (Sigma), 1 g/l histidine (Sigma), 5 g/l sodium thiosulphate (BDH) and 34 g/l potassium dihydrogen phosphate (BDH) in tryptone soya broth (Oxoid). Two controls were required to validate this neutralizer: first, the neutralizer's toxicity had to be assessed against the test bacteria, and second, its ability to quench the corresponding antimicrobial activity had to be confirmed.

One millilitre of interfering substance (or sterile water for perfect conditions) was mixed with 1 mL of bacterial test suspension. After 2 min, 8 mL of one of the product solutions was added to the mixture and shaken. After 1 and 5 min, 1 mL of the test mixture was transferred into a tube containing 8 mL of neutralizer and 1 mL of sterile water, and mixed. After a neutralization time of 5 min, solutions were serially diluted and viable counts were performed. Plates were incubated for 24 h at 37 °C, counted, and then re-incubated for a further 24 h to detect slow-growing colonies.

The requirement of this standard is a minimum reduction by a factor of 105 within 5 min.

Table 12

| Sample name | Log10 reduction |
|---|---|
| Si-QAC 5% | 1.03 |
| Si-QAC 7.5% | 1.69 |
| Si-QAC 10% | 1.89 |
| Si-QAC 5%-WA1 | 0.98 |
| Si-QAC 5%-WA2 | 1.12 |
| Si-QAC 5%-WA3 | 1.01 |
| Si-QAC 10%-WA1 | 1.92 |
| Si-QAC 10%-WA2 | 2.01 |
| Si-QAC 10%-WA3 | 2.13 |
| Si-QAC 5%-AG | 5.12 |

The antimicrobial activity of Si-QAC is concentration dependent.

The co-formulation of Si-QAC with different types of ethoxylated alcohols as wetting agents (WA1, WA2, WA3, differing in the length of the linear alkyl chain) slightly increases the antimicrobial activity of the Si-QAC, while the supplementation of a second antimicrobial agent, such as benzalkonium chloride, greatly increases the antimicrobial activity of Si-QAC.

## Claims

1. Liquid Antimicrobial composition comprising at least one quaternary ammonium silicone compound (Si-QAC) and at least one curing agent and optionally further comprising a wetting agent and/or at least one primer and/or a cross-linker being a polyphenol containing at least two hydroxyl groups.

2. Composition according to claim 1 wherein the quaternary ammonium silicone compound (Si-QAC) is selected from the group consisting of: 3-(trimethoxysilyl)propyldimethyloctadecyl ammonium; 3-(trimethoxysilyl)propyldimethyl-

octadecyl ammonium chloride, 3-(trihydroxysilyl)propyldimethyloctadecyl ammonium ion, or 3-(trihydroxysilyl)propyldimethylocta-decyl ammonium chloride.

**3.** Composition according to claim 1 wherein the curing agent is selected from the group consisting of: hypochlorous acid and salts thereof, chlorine dioxide, sodium dichloroisocyanurate, chloramine-T, halazone, chlorhexidine.

**4.** Composition according to claim 1 wherein the cross linker being a polyphenol containing at least two hydroxyl groups is selected from the group consisting of: tannic acid, stilbenes (i.e. rhapontin, resveratrol, pinosylvin), cinnamic acid (i.e caffeic acid, caffeic acid 1,1-dimethylallyl ester, chicoric acid, cinnamyl-3,4-dihydroxy-α-cyanocinnamate, 2,4-dihydroxycinnamic acid, ethyl 3,4-dihydroxycinnamate, chlorogenic acid, CU-CPT22 acid), benzoic acids (i.e. butyl gallate, ethyl 3,5-dihydroxybenzoate, 3,4-dihydroxy-benzoic acid methyl ester, 2,4-dihydroxy-3,6-dimethylbenzoic acid, isopropyl 3,4,5-trihydroxybenzoate, methyl 3,5 dihydroxybenzoate), flavonoids (i.e cardamonin, dihydromyricetin, diosmin, epigallocatechin gallate, myricetin, myricitrin, quercetin 3-β-D-glucoside, rutin, silibinin, taxifolin, wedelolactone), coumarins (i.e. baicalein, 3',5'-dihydroxyflavone, 5,7-dihydroxy-4-phenylcoumarin, 5,7-dihydroxy-4-propylcoumarin, 5,7-dihydroxy-4-methylcoumarin) and naphtoquinones (i.e. 5,8-dihydroxy-1,4-naphthoquinone, 2,3-dichloro-5,8-dihydroxy-1,4-naphthoquinone).

**5.** Composition according to claim 1 wherein the primer is selected from the group consisting of: epoxy resins, for example bisphenol-based epoxy resins, novolacks, aliphatic epoxy resins, halogenated epoxy resins, epoxy diluents, glycidylamine epoxy resins, hardened with polyamines curing agents.

**6.** Composition according to claim 1 wherein the wetting agent is an ethoxylated alcohols with linear alkyl chain C9-C16.

**7.** Kit for subsequent use consisting of:

a) a first liquid composition comprising at least one quaternary ammonium silicone compound (Si-QAC) and optionally at least one wetting agent and/or at least one primer
b) a second liquid composition comprising at least one curing agent and optionally further comprising at least one cross-linker being a polyphenol containing at least two hydroxyl groups.

**8.** Use of the composition according to claims 1-6 and kit of claim 7 for cleaning and/or disinfecting surfaces.

**9.** Use of the composition according to claims 1-6 and kit of claim 7 for the long-term antimicrobial protection of hard surfaces.

**10.** Method for cleaning and/or disinfecting surfaces, preferably for the long-term antimicrobial protection of hard surfaces, comprising the following steps:

a) adding to the surface a first liquid composition comprising at least one quaternary ammonium silicone compound (Si-QAC) and optionally at least one wetting agent and/or at least one primer
b) adding to the surface as obtained at the end of step a) a second liquid composition comprising at least one curing agent and optionally further comprising at least one cross-linker being a polyphenol containing at least two hydroxyl groups

wherein upon the addition each aqueous solution the surfaces are allowed to dry at room temperature for at least two hours.

**11.** Method according to claim 10 comprising an additional step a') before step a) of disinfecting the surface with an aqueous solution of at least one alcohol.

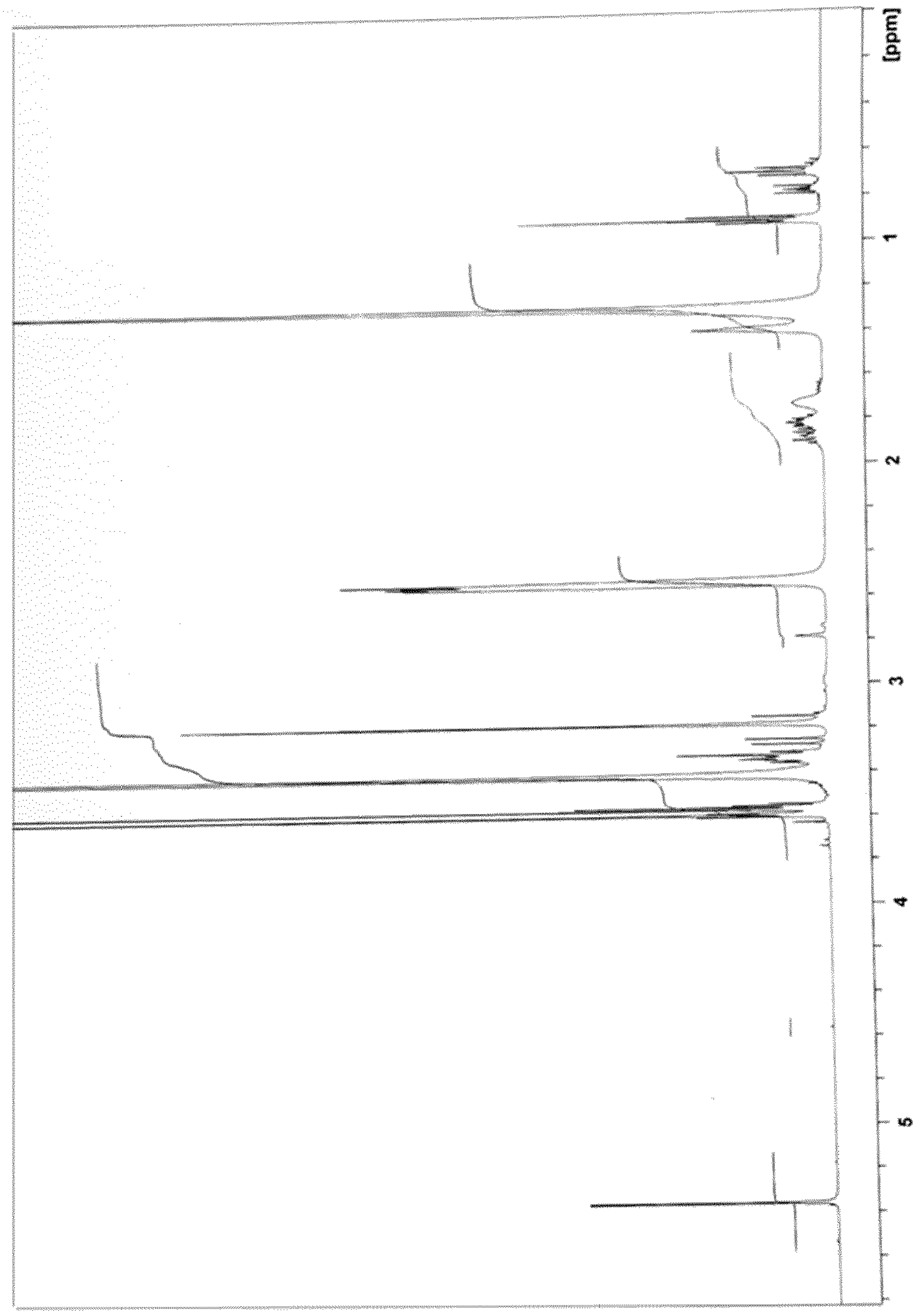


FIG 1

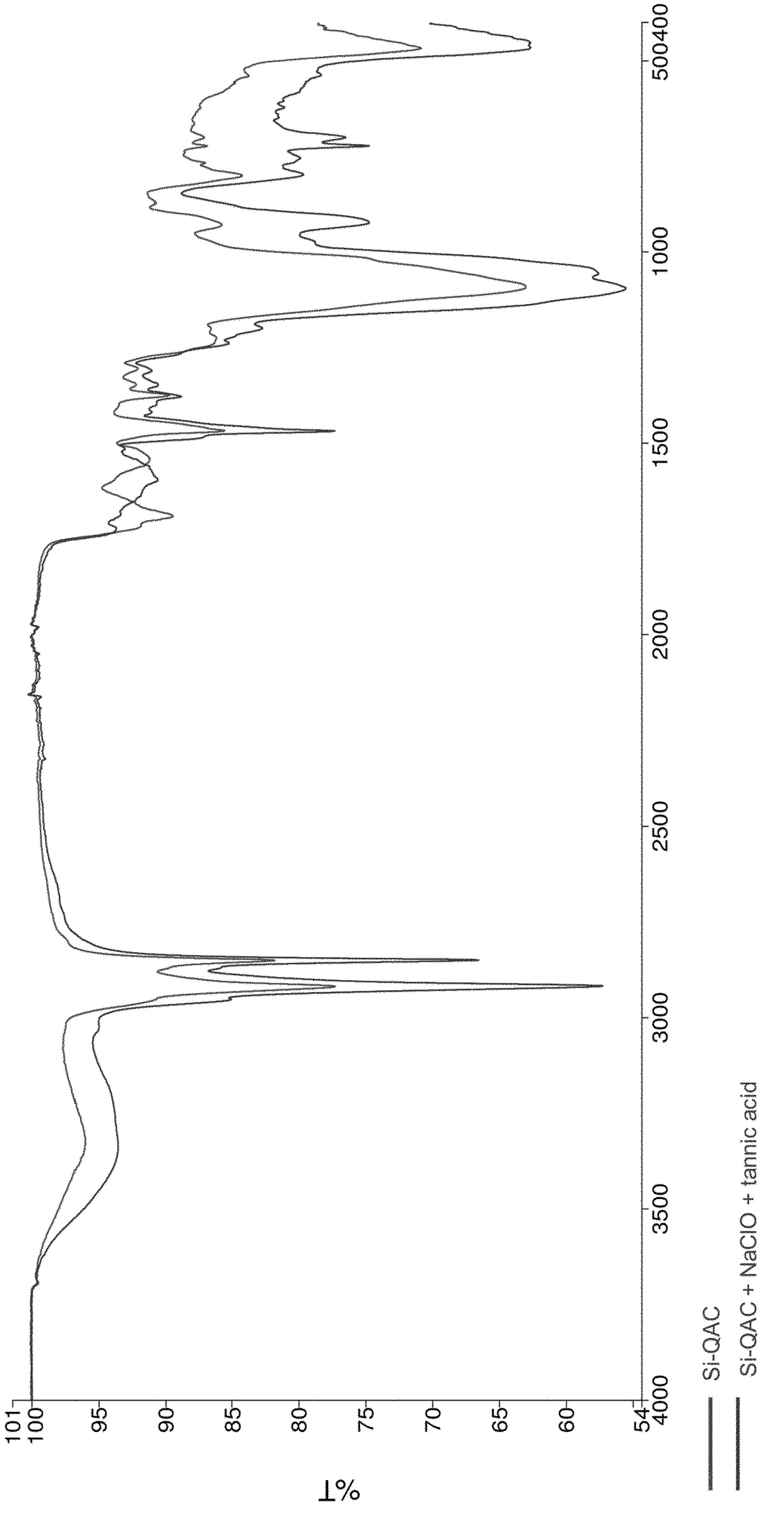
%T
101
100
95
90
85
80
75
70
65
60
54
4000
3500
3000
2500
2000
1500
1000
500400
Si-QAC
Si-QAC + NaClO + tannic acid

FIG 2

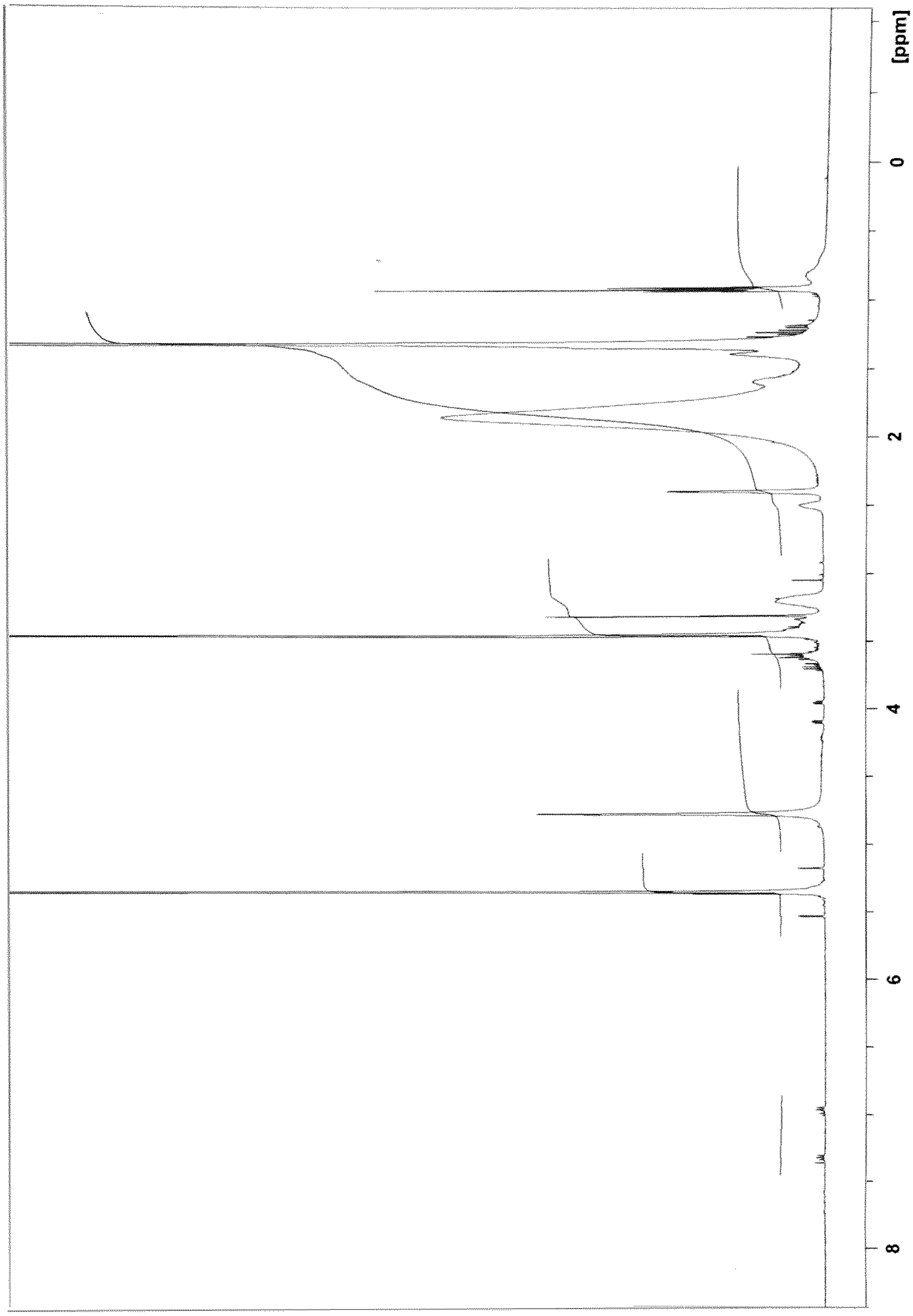


FIG 3

Europäisches Patentamt
European Patent Office
Office européen des brevets

# EUROPEAN SEARCH REPORT

Application Number
EP 22 19 0165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAOOD U ET AL: "An in vitro study of a novel quaternary ammonium silane endodontic irrigant", DENTAL MATERIALS, ELSEVIER, AMSTERDAM, NL, vol. 35, no. 9, 12 June 2019 (2019-06-12), pages 1264-1278, XP085774112, ISSN: 0109-5641, DOI: 10.1016/J.DENTAL.2019.05.020 [retrieved on 2019-06-12] | 1,3-8 | INV. A01N33/12 A01N59/00 A01N31/16 A01P1/00 |
| Y | * page 1266, column 2, line 16 - line 19 * * table 1 * ----- | 1-11 | |
| X | EP 0 129 980 A2 (PROCTER & GAMBLE [US]; PROCTER & GAMBLE LTD [GB]) 2 January 1985 (1985-01-02) | 1-9 | |
| Y | * page 1, line 9 - line 15 * * page 3, line 6 - line 12 * * examples 1-3 * * claims 1, 2 * ----- | 1-11 | |
| X | EP 3 818 827 A2 (PARASOL MEDICAL LLC [US]) 12 May 2021 (2021-05-12) | 1-9 | TECHNICAL FIELDS SEARCHED (IPC) |
| Y | * paragraphs [0004], [0018] * * claims 1, 3 * ----- | 1-11 | A01N A01P |
| Y | US 4 847 088 A (BLANK LYNNE M B [US]) 11 July 1989 (1989-07-11) * claims 1, 5-8 * ----- | 1-11 | |
| X | CN 110 800 738 A (FUZHOU KELI TECH DEVELOPMENT CO LTD) 18 February 2020 (2020-02-18) | 1-8 | |
| Y | * paragraphs [0001], [0006] - [0007] * ----- | 1-11 | |

-/--

The present search report has been drawn up for all claims

1

| Place of search | Date of completion of the search | Examiner |
|---|---|---|
| Munich | 12 January 2023 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 19 0165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/140408 A1 (COLLIDION INC [US]) 18 July 2019 (2019-07-18) | 1-9 | |
| Y | * paragraph [0226] * * compositions F76, F77, F80, F95A-F95P, F96, F110, F119, F124-F127 * * compositions F134, F138, F139, F141-F143, F145, F147-F150, F182-F195 * * claims 37-39 * ----- | 1-11 | |
| Y | CN 110 014 489 A (ANHUI BAIQIRUI BUILDING MATERIAL TECH CO LTD) 16 July 2019 (2019-07-16) * the whole document * ----- | 1-11 | |

TECHNICAL FIELDS SEARCHED (IPC)

The present search report has been drawn up for all claims

1

| Place of search | Date of completion of the search | Examiner |
|---|---|---|
| Munich | 12 January 2023 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 19 0165

This annex lists the patent family members relating to the patent documents cited in the above-mentioned European search report. The members are as contained in the European Patent Office EDP file on
The European Patent Office is in no way liable for these particulars which are merely given for the purpose of information.

12-01-2023

| Patent document cited in search report | Publication date | Patent family member(s) | Publication date |
|---|---|---|---|
| EP 0129980 A2 | 02-01-1985 | AT 40151 T | 15-02-1989 |
| | | CA 1217004 A | 27-01-1987 |
| | | EP 0129980 A2 | 02-01-1985 |
| | | ES 8603944 A1 | 01-01-1986 |
| | | GR 81613 B | 11-12-1984 |
| | | IE 57534 B1 | 04-11-1992 |
| | | JP H0455480 B2 | 03-09-1992 |
| | | JP S6063300 A | 11-04-1985 |
| EP 3818827 A2 | 12-05-2021 | AR 121182 A1 | 27-04-2022 |
| | | AU 2020267176 A1 | 27-05-2021 |
| | | BR 102020022882 A2 | 18-05-2021 |
| | | CN 112772673 A | 11-05-2021 |
| | | EP 3818827 A2 | 12-05-2021 |
| | | US 2021137120 A1 | 13-05-2021 |
| US 4847088 A | 11-07-1989 | AU 624134 B2 | 04-06-1992 |
| | | CA 1324955 C | 07-12-1993 |
| | | DE 68913792 T2 | 27-10-1994 |
| | | EP 0339957 A2 | 02-11-1989 |
| | | JP H078767 B2 | 01-02-1995 |
| | | JP H01313408 A | 18-12-1989 |
| | | KR 900015720 A | 10-11-1990 |
| | | US 4847088 A | 11-07-1989 |
| CN 110800738 A | 18-02-2020 | NONE | |
| WO 2019140408 A1 | 18-07-2019 | AU 2019208100 A1 | 03-09-2020 |
| | | BR 112020014234 A2 | 08-12-2020 |
| | | CA 3088373 A1 | 18-07-2019 |
| | | CN 111801122 A | 20-10-2020 |
| | | EP 3737425 A1 | 18-11-2020 |
| | | IL 275980 A | 31-08-2020 |
| | | JP 2021511304 A | 06-05-2021 |
| | | KR 20200123421 A | 29-10-2020 |
| | | SG 11202006664U A | 28-08-2020 |
| | | US 2019216090 A1 | 18-07-2019 |
| | | US 2022211044 A1 | 07-07-2022 |
| | | WO 2019140408 A1 | 18-07-2019 |
| | | ZA 202004971 B | 25-08-2021 |
| CN 110014489 A | 16-07-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0129980 A
- EP 3818827 A
- US 4847088 A


### Non-patent literature cited in the description


- **ISQUITH, A. J. ; ABBOTT, E. A. ; WALTERS, P. A.** Surface-bonded antimicrobial activity of an organosilicon quaternary ammonium chloride. *Appl. Microbiol,* 1972, vol. 24, 859-863
- **ANDRESEN, M. et al.** Nonleaching Antimicrobial Films Prepared from Surface-Modified Microfibrillated Cellulose. *Biomacromolecules,* 2007, vol. 8, 2149-2155
- **TORKELSON, A. A. et al.** Investigation of quaternary ammonium silane-coated sand filters for the removal of bacteria and viruses from drinking water. *J. Appl. Microbiol.,* 2012, vol. 113, 1196-1207
- **POVERENOV, E. et al.** Durable contact active antimicrobial materials formed by a one-step covalent modification of polyvinyl alcohol, cellulose and glass surfaces. *Colloids Surfaces B Biointerfaces,* 2013, vol. 112, 356-361
- **MENG, J. et al.** Antibacterial cellulose membrane via one-step covalent immobilization of ammonium/amine groups. *Desalination,* 2015, vol. 359, 156-166
- **GOTTENBOS, B. ; VAN DER MEI, H. C. ; KLATTER, F. ; NIEUWENHUIS, P. ; BUSSCHER, H.** J. In vitro and in vivo antimicrobial activity of covalently coupled quaternary ammonium silane coatings on silicone rubber. *Biomaterials,* 2002, vol. 23, 1417-1423
- **NIKAWA, H. et al.** Immobilization of Octadecyl Ammonium Chloride on the Surface of Titanium and Its Effect on Microbial Colonization In Vitro. *Dent. Mater. J.,* 2005, vol. 24, 570-582
- **GOTTENBOS, B. ; VAN DER MEI, H. C. ; KLATTER, F. ; NIEUWENHUIS, P. ; BUSSCHER, H. J.** In vitro and in vivo antimicrobial activity of covalently coupled quaternary ammonium silane coatings on silicone rubber. *Biomaterials,* 2002, vol. 23, 1417-1423
- **FADIDA, T. et al.** Air-ozonolysis to generate contact active antimicrobial surfaces: activation of polyethylene and polystyrene followed by covalent graft of quaternary ammonium salts. *Colloids Surf. B. Biointerfaces,* 2014, vol. 122, 294-300
- **KHASKIN, E. et al.** A contact active bactericidal stainless steel via a sustainable process utilizing electrodeposition and covalent attachment in water. *Green Chem.,* 2015, vol. 17, 2344-2347
- **KIM, H. W. ; KIM, B. R. ; RHEE, Y. H.** Imparting durable antimicrobial properties to cotton fabrics using alginate-quaternary ammonium complex nanoparticles. *Carbohydr. Polym.,* 2010, vol. 79, 1057-1062
- **SONG, J. ; KONG, H. ; JANG, J.** Bacterial adhesion inhibition of the quaternary ammonium functionalized silica nanoparticles. *Colloids Surfaces B Biointerfaces,* 2011, vol. 82, 651-656
- An in vitro study of a novel quaternary ammonium silane endodontic irrigant. **DAOOD U et al.** DENTAL MATERIALS. ELSEVIER, 2019, vol. 35, 1264-1278
- **BAJIA, S. ; SHARMA, R. ; BAJIA, B.** Solid-State Microwave Synthesis of Melamine-Formaldehyde Resin. *E-Journal Chem,* 2009, vol. 6, 807851
- **BLOCK, M. S. ; ROWAN, B. G.** Hypochlorous Acid: A Review. *J. Oral Maxillofac. Surg.,* 2020, vol. 78, 1461-1466
- **SAKIÉ, D. ; HANZEVACKI, M. ; SMITH, D. M. ; VRCEK, V.** A computational study of the chlorination and hydroxylation of amines by hypochlorous acid. *Org. Biomol. Chem.,* 2015, vol. 13, 11740-11752
- **DONG, G. et al.** Antimicrobial and anti-biofilm activity of tannic acid against Staphylococcus aureus. *Nat. Prod. Res.,* 2018, vol. 32, 2225-2228